Europäisches Patentamt

European Patent Office

Office européen des brevets

(19)

(11) Publication number: **0 067 253**
**A1**

(12)    # EUROPEAN PATENT APPLICATION

(21) Application number: **81302545.9**

(22) Date of filing: **09.06.81**

(51) Int. Cl.³: **B 60 T 13/66**

(43) Date of publication of application:
**22.12.82** Bulletin **82/51**

(84) Designated Contracting States:
**DE FR IT NL SE**

(71) Applicant: **GEEST INDUSTRIAL GROUP LIMITED**
**West Marsh Road**
**Spalding Lincolnshire(GB)**

(72) Inventor: **Dyson, John**
**Westfield House High Street**
**Clophill Bedford(GB)**

(72) Inventor: **Blowey, Andrew Thomas**
**Rudwick Hall**
**Peters Green Luton(GB)**

(72) Inventor: **Bruce, Anthony Randolph**
**Fairhouse Farm**
**Churchinford Taunton Somerset(GB)**

(74) Representative: **SERJEANTS**
**25 The Crescent King Street**
**Leicester, LE1 6RX(GB)**

(54) Towed vehicle brake systems.

(57) A brake system for a towed vehicle coupled to a towing vehicle has, on the towed vehicle, an accumulator (17). The accumulator (17) is connected through two lines (12, 31) and (14) to a towed vehicle brake mechanism. Each line contains a servo-operable valve (22) and (27) respectively for making the lines operative. A control system (28, 29), conveniently electrical, controls the valves (22) and (27) in response to operation of a brake pedal on the towing vehicle. One valve (22) is operated directly and opens line (12) to permit braking of the towed vehicle in response to overrun forces exerted by the towed vehicle using a proportional brake valve (11) and line (31). The other valve (27) is operated if the control system senses that the first line (12, 31) is ineffective when braking is required using a timing delay means (29).

FIG. 2

EP 0 067 253 A1

-1-

TITLE:

Towed vehicle brake systems

DESCRIPTION:

The invention relates to towed vehicle brake systems for use particularly in applications where the towed vehicle weight varies significantly. Examples of such applications include trailers, fertiliser distribution equipment and harvesters. The invention may be applied particularly to tipping trailers for use in agriculture.

Background of invention

Various forms of overrun brake systems for trailers are known (see British Patent Specifications 1,414,050; 523,917; 520,874; 518,506; 383,213; 303,054). Sometimes overrun brake operation is conditional upon operation of a brake member on the towing vehicle (see British Patent Specification 523,917).

Mostly, the braking valves and any reservoirs for brake controlling fluid are located on the towing vehicle. It then becomes necessary that the system components on the towed and towing vehicle are matched. In practice this means that brake mechanisms have to be fitted on trailers or tractors following their commercial distribution preventing the use of braking equipment on towed vehicles intended for a wide variety of end uses. In addition the known systems do not contain suitable

-2-

safeguards in the event of brake mal-function or other accidents such as the parting of the towing and towed vehicle.

It is therefore an object to provide a towed vehicle brake system which is largely autonomous and only requires to be coupled up to a hydraulic fluid supply on the towing vehicle and for which only minor and few additional components need to be mounted on the towing vehicle.

It is a further object of the invention to provide a system which can be mounted on different types of trailers including trailers exerting a downward load on the tow bar and which will function in a wide variety of use conditions without requiring substantive adaptation.

General Disclosure of invention

The invention provides a towed vehicle brake system including a hydraulic overrun brake mechanism operable in response to the overrun tendency of the towed vehicle towards a towing vehicle, characterised in that an accumulator on the towed vehicle is connected through two parallel lines, each containing a servo-operable valve, to the towed vehicle brake mechanism and in that a control system controls the valves in response to operation of a brake member on the towing vehicle to open one line to initiate brake control by a proportional brake valve through a line and to open the other line to provide overriding brake actuation, if the control system senses the first line to be ineffective after the brake member has been operated to initiate braking.

The accumulator provides an autonomous power source on the towed vehicle and the parallel line dual control system ensures braking effort is available both during normal operations and when modulated braking is ineffective for some reason. Thus the reliability of brake actuation of known direct brake mechanism is achieved but more sensible braking compensating for the weight of the towed vehicle is available at the same time.

Preferably the control system includes an electrical switch responsive to operation of the brake member for operating a solenoid controlling the valve when the brake member is moved to brake the towing vehicle and operative to activate a timing delay means receiving an input from a pressure sensing device to operate a solendoi controlling the valve to provide overriding brake action if necessary. Thus only an electrical switchhas to be fitted onto the tractor for the whole towed vehicle brake system to become operative. If required the electrical switch is arranged to be operative after an initial amount of travel in which only the towing vehicle brake mechanism is actuated. Advantageously the switch is opened when the brake member is moved to brake the towed vehicle and the circuits for the solenoids of valves and the timing delay means are arranged to respond to the opening of the switch. Thus if the electrical connection is accidentally severed, the brake mechanism will be activated, so avoiding a condition in which the towed vehicle is not braked in the event of an accident or breakaway. The brake member may concurrently operate a brake mechanism of the towing vehicle or may be independent thereof. The brake member may be a foot pedal or a hand operated lever.

Preferably an accumulator charging control valve is on the towed vehicle and an accessory control device is arranged for receiving hydraulic fluid which is surplus to the requirements for charging the accumulator so that the towed vehicle brake system has priority in obtaining the hydraulic fluid from the accumulator. Thus an accessory device can be accommodated without requiring extra hydraulic lines. In fact the brake system can be operated using the conventional hydraulic fluid take-off of the tractor. Suitable a valve for controlling the accessory device is controlled by solenoids arranged so that in the event of electrical power failure the accumulator will be charged. In a particularly safe variant the valve is a diverter valve upstream of the accumulator charging control valve and a pressure sensitive switch is utilised for overriding control of the valve by means to move the valve to the accumulator charging position when the accumulator pressure drops below a predetermined level.

In order to ensure that the systems function with unbalanced trailers whether they are fully loaded or empty, suitably the proportional brake valve is controllable on an unbalanced towed vehicle whose tow bar is loaded down by loads on the vehicle by relative movement between that tow bar and a telescoping element for coupling to the towing vehicle and the element mounted at the top and bottom by rubber anti-vibration mountings so as to permit telescoping movement under varying downward loadings of the tow bar. Alternatively the proportional brake valve is controllable on an unbalanced towed vehicle whose tow bar is loaded downwards by loads on the vehicle by a relative displacement between the tow bar and an upper element connected by parallel depending to a lower element fast to the tow bar so as to permit relative displacement under varying downward loadings of the two bar. In the latter case the weight exerted by the load automatically increases the restoring force on the parallel links, thus enabling one set up to operate in a wide variety of conditions.

DRAWINGS

Figure 1 shows schematically those parts secured on the tractor of a trailer braking system according to the invention;

Figure 2 shows schematically some of the parts secured to the trailer of a trailer braking system according to the invention;

Figure 3 shows schematically the remaining parts secured to the trailer of the trailer braking system;

Figures 4, 5, 6 and 7 shows different operational conditions of a spool valve of the system of Figures 1 to 3;

Figure 8 shows a section through a brake force modulating valve of the system of Figures 1 to 3;

Figure 9, 10 and 11 show different sections of a tow bar interconnecting a tractor and trailer combination incorporating the system according to Figures 1 to 3;

Figures 12, 13 and 14 show enlarged different sections through the rear part of the tow bar of Figures 9 to 11;

Figure 15 shows a modified braking system not including a tipping function.

Figure 16 shows a side elevation of a different tow bar assembly for a system according to the invention;

Figure 17 is a longitudinal section through the assembly of Figure 16 with a top coverplate added;

- 6 -

Figure 18 is a top elevation of the assembly of Figure 16;   .

Figure 19 is a section through line XIX-XIX of Figure 17;

Figure 20 is a section through line XX-XX of Figure 17;

Figure 21 is a schematic representation of a hydraulic circuit for cooperating with the assembly of Figures 16 to 20.

Specific Description

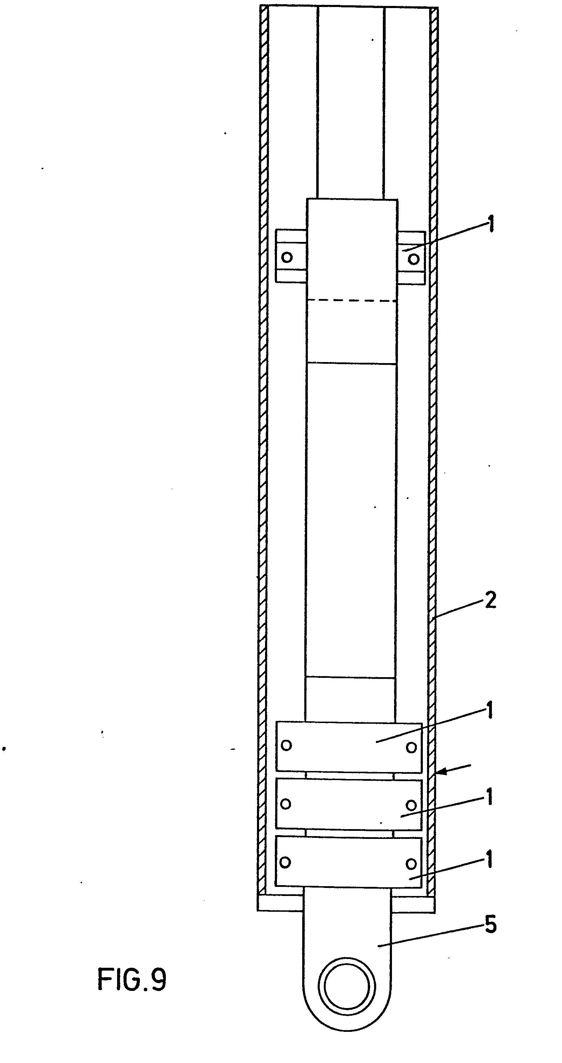

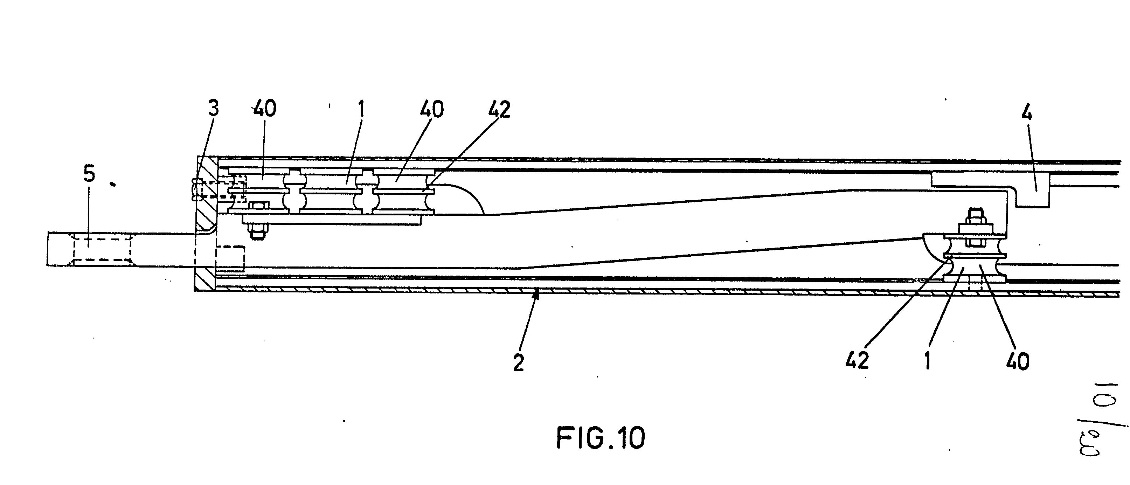

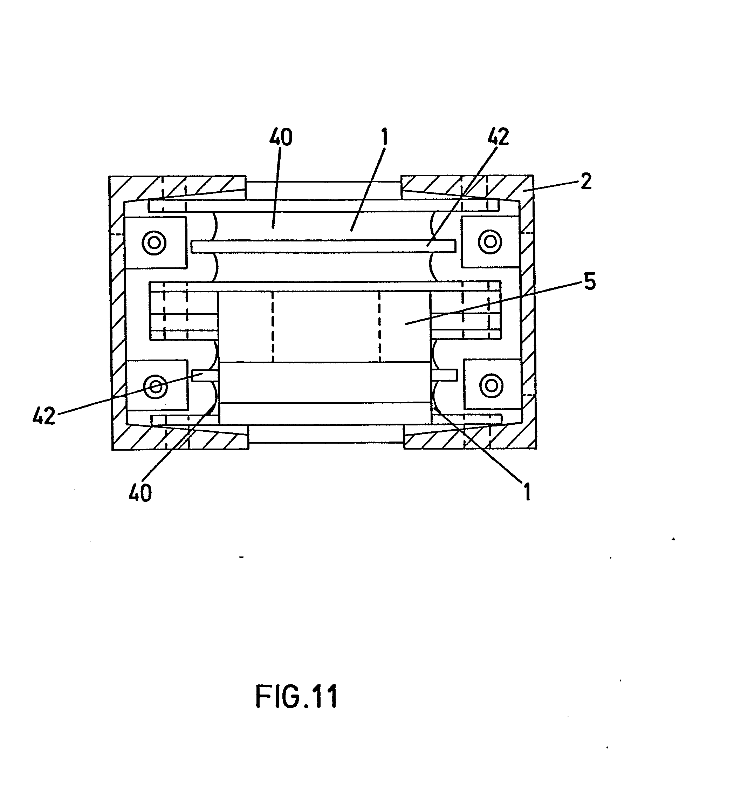

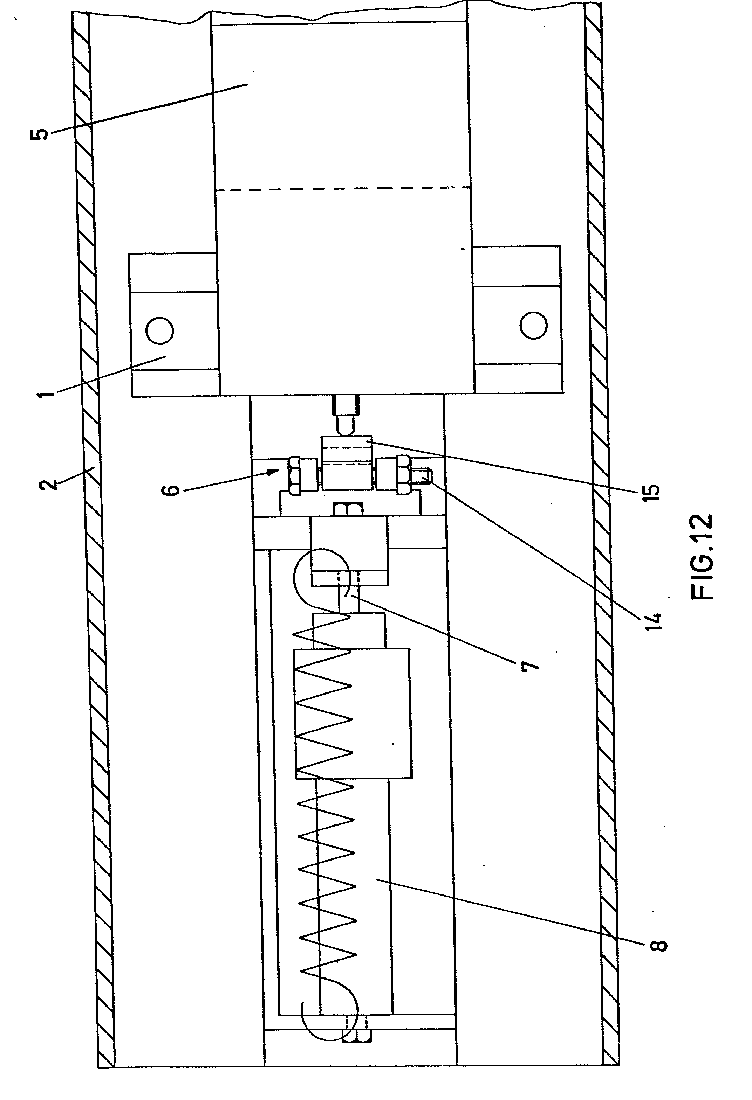

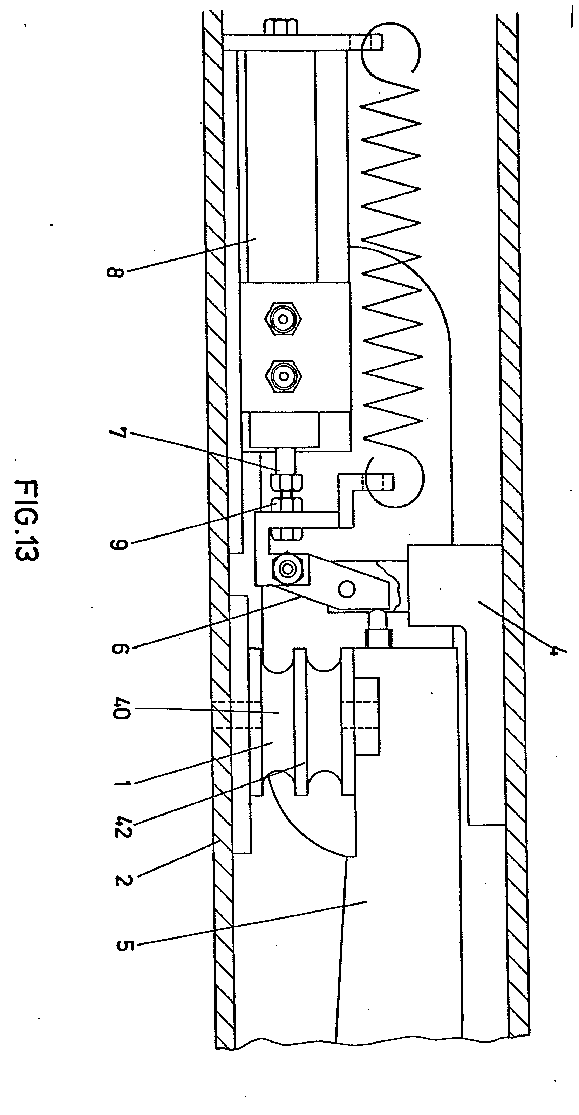

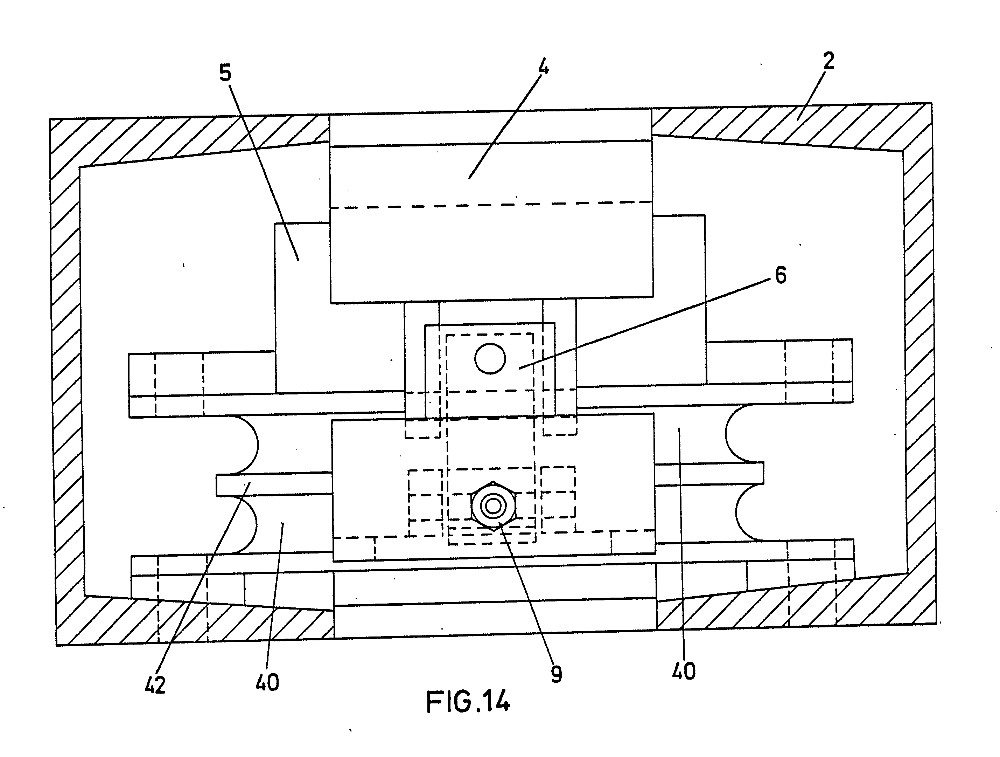

With reference to Figures 9 to 14, a movable sensing element 5 of a draw or tow bar having an eye for fastening to a tractor hitch point determines the required level of braking and is mounted in a fixed trailer draw bar element 2 pivotably coupled to the trailer in the case of a four wheel trailer or fast to a trailer frame for a trailer having rear wheels only.   The sensing element 5 is supported by four anti-vibration mountings 1.   The mountings 1 can support a large compressive load and deflect relatively easily in shear longitudinally of the sensing element 5. The element 5 can thus be moved longitudinally to sense the hitch force without much friction, responding promptly to changes in the applied hitch force even when the element is subjected to transverse force components.

The mountings 1 each have rubber pads 40 adhered to metal plates 42 arranged parallel to the sensing element 5.   Damage to the rubber pads 40 is prevented by the use of metal stops 3 and 4 which limit sensing element movement in the longitudinal direction, and by the guidance and constraint effected by the internal walls of the rectangular hollow section of the fixed draw bar element 2 which limit motion in a transverse direction. Longitudinal movement of the rubber mountings 1 is thus limited so as to restrict the maximum working shear force during shortening or extending of the draw bar. The mountings 1 are also protected in both vertical directions, that is for shock loading in compression and also to prevent the mountings being tensioned by the trailer exerting an upward force on the drawbar element 2 by the use of the metal stops 3 and 4 shown in Figures 9 to 11.

Longitudinal movement of the element 5, causes a piston 7 of a master cylinder assembly 8 to be shifted via a mechanical magnifying linkage 6. The piston 7 in turn triggers a hydraulic part of the trailer braking system. Adjusting screws 9 are provided so that initiation of trailer braking can be timed relative to the initiation of the tractor braking.

The relative movement of the sensing element 5 and the drawbar is thus sensed by the master cylinder assembly 8. The movement of the piston 7 can, optionally, be magnified by using a slave cylinder 10 of a smaller diameter. The drawbar is thus constructed in such a way that it may be subjected to a downward load as occurs on an unbalanced trailer or be unloaded as on conventional four wheel trailers.

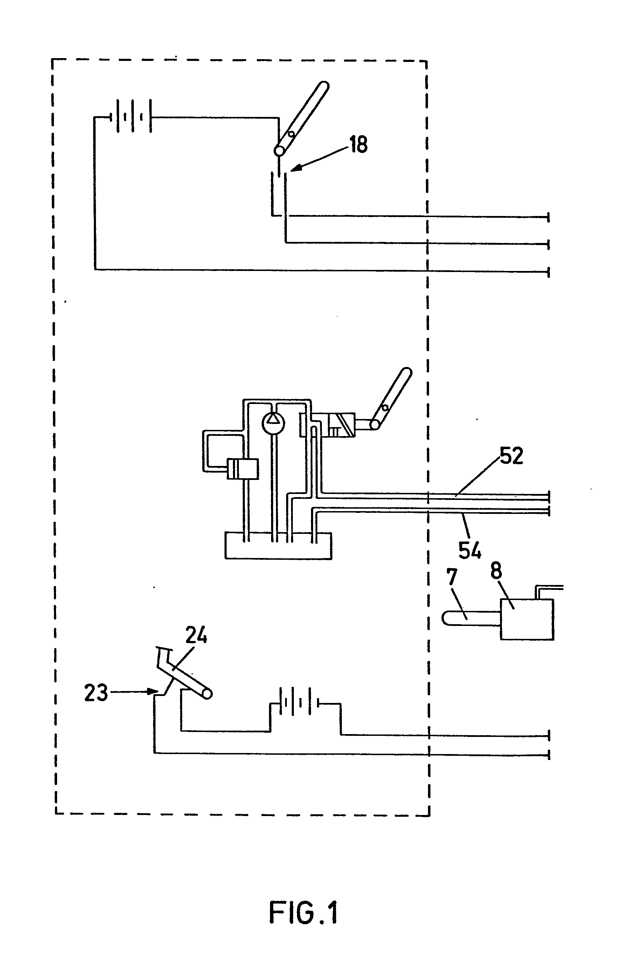

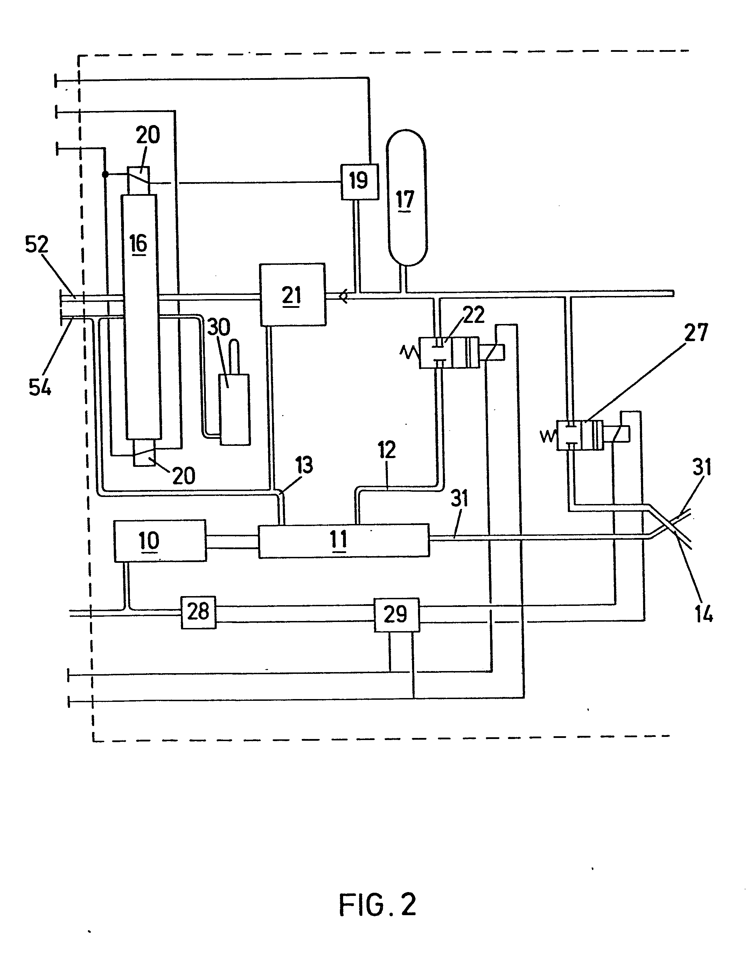

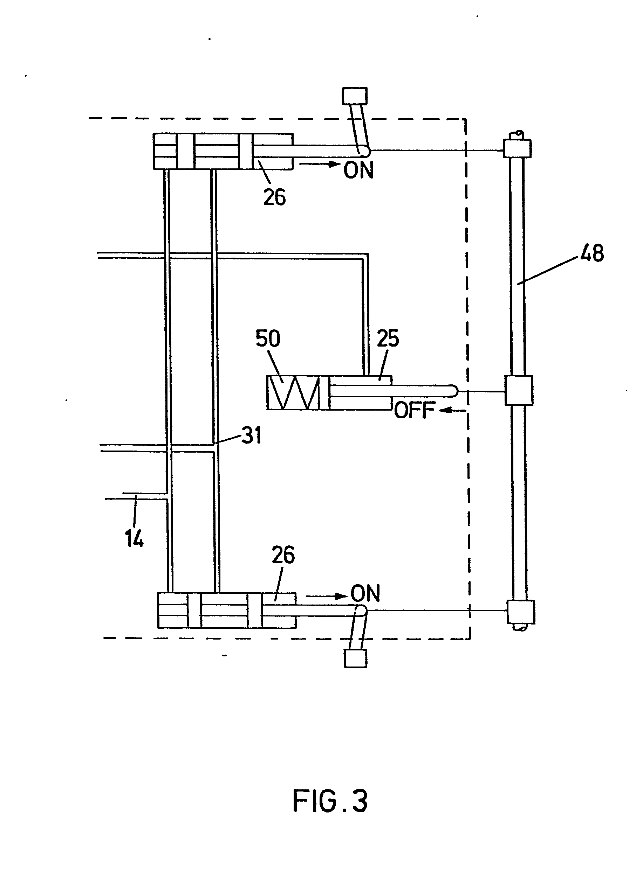

With reference to Figures 1 to 3, a hydraulic connection between the master and slave cylinders can be designed so as to give a damping effect. A smooth braking performance can thus be provided by appropriately designing the interconnection and adjusting the piston of the master cylinder.

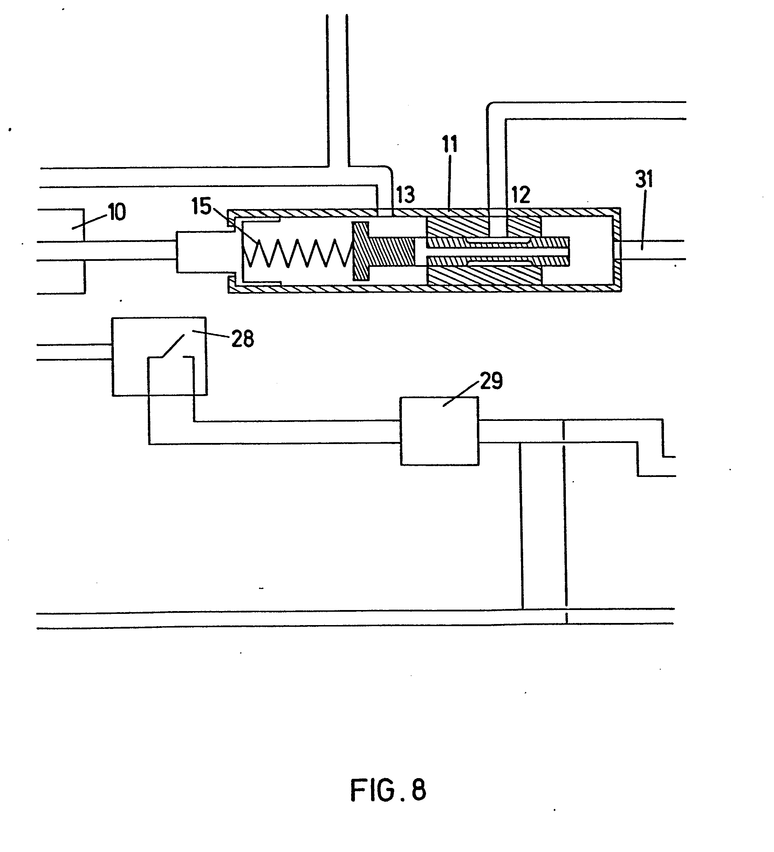

In a typical design, the movement of the master cylinder piston 7, will be approximately 7 mm. A slave cylinder piston 44 of half the master cylinder diameter would give a deflection of 28 mm which is adequate for operation of a proportional brake valve 11 of a type requiring considerable actuating force. The valve 11 is a pressure regulating valve arranged to produce a brake line pressure which is related to the extent of movement of the slave cylinder 10. There are three hydraulic connections to the brake valve for respectively a pressure or service line 12, a return line 13 and a brake line 31. The maximum pressure can be limited by the stiffness of a valve spring 15 which biasses a valve spool 46 (See Figure 8) to a closed position.

The hydraulic circuits includes a double solenoid valve 16 which is used as a diverter valve for controlling a tipping ram 30 but has an automatic return to an accumulator charging position when the pressure in an accumulator 17 falls below a predetermined level. The valve 16 is controlled by an operator selected three position electrical switch 18 and a pressure switch 19 in a manner which will be explained in detail later.

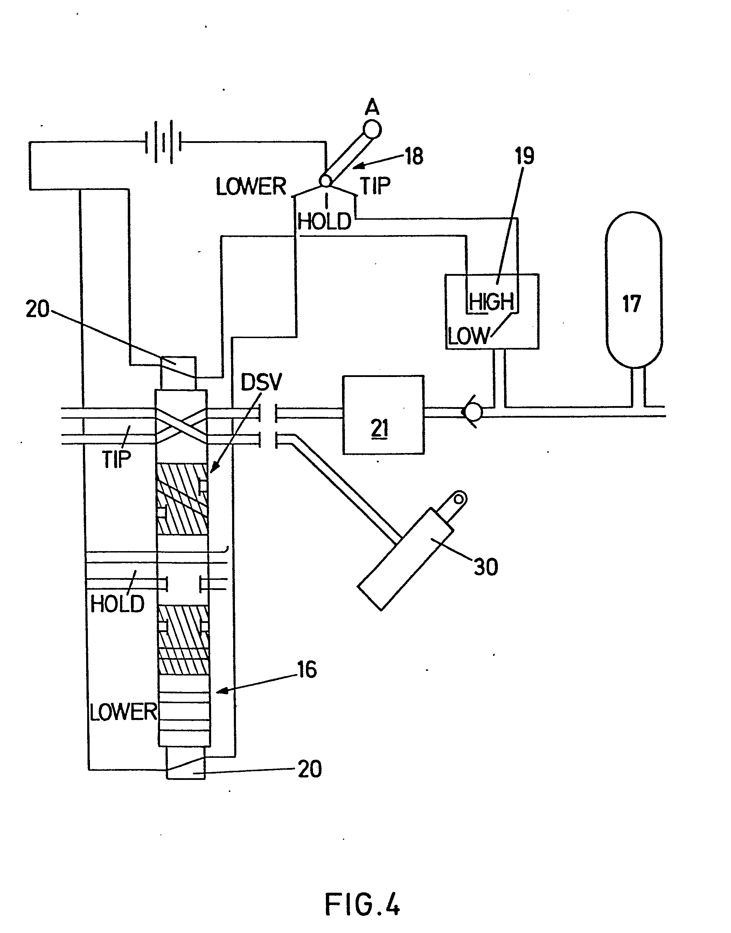

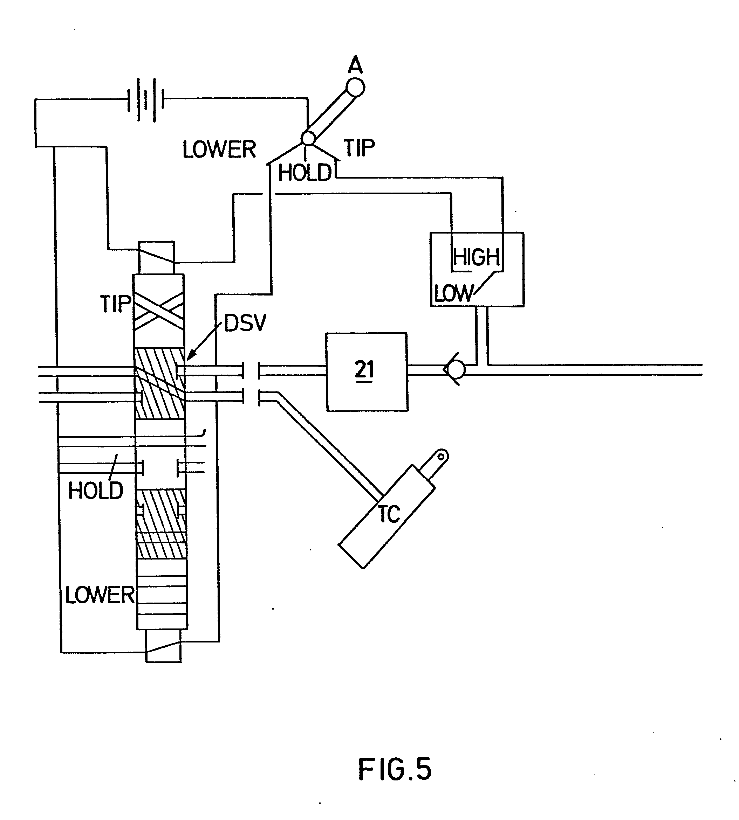

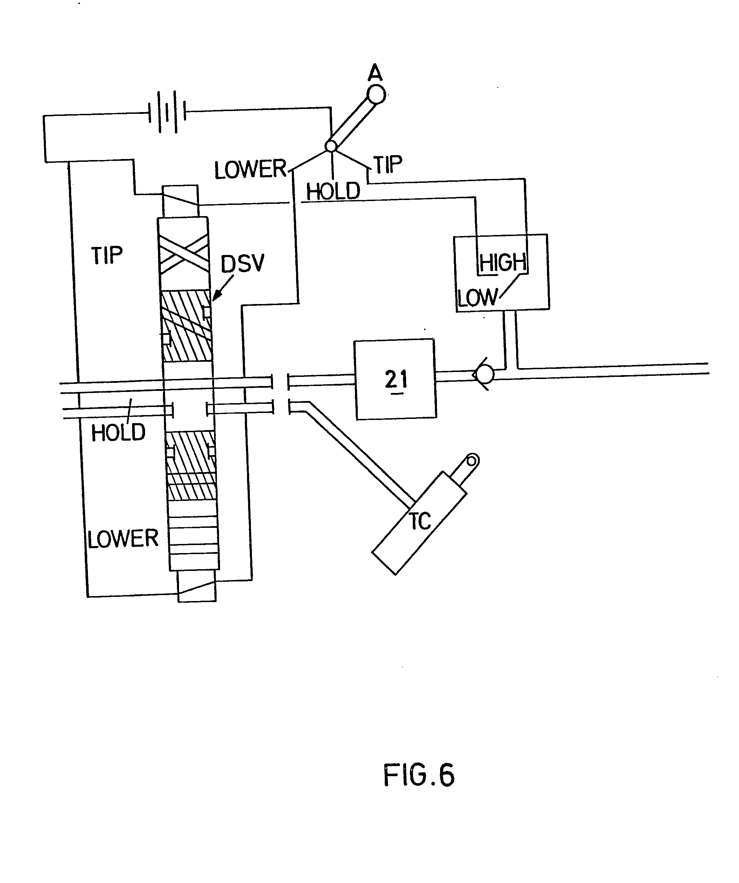

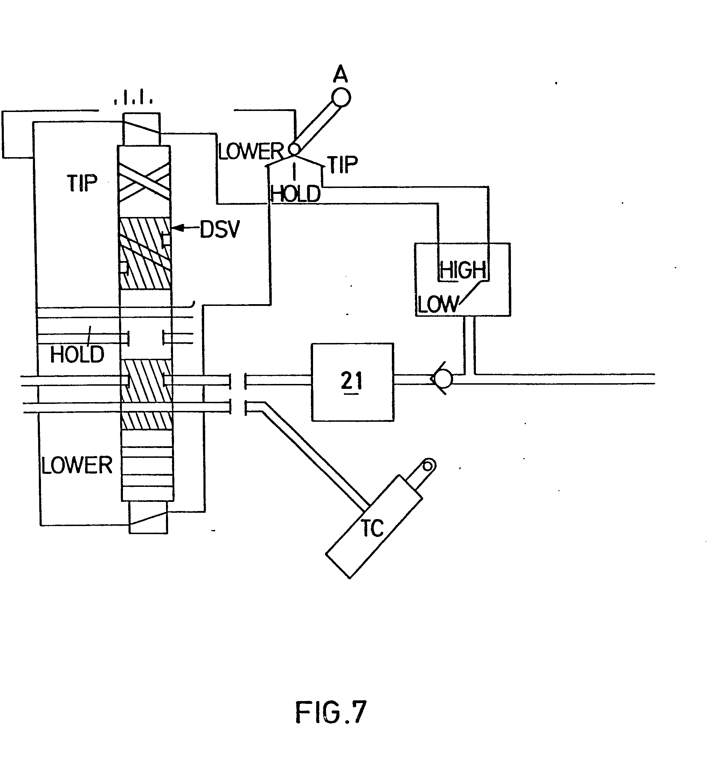

The shaded portions of the valve 16 in Figures 4 to 7 represent the valve positions taken up by the valve 16 when changing from one major position to another, which takes about 0.1 seconds. The three major positions give tipping from a low position; hold at a partly or wholly tipped position; and lowering to the low position. The tip and lower positions are brought about when one or two solenoids 20, controlling the valve 16 is energised and the hold position arises when neither solenoid 20 is energised. The tip position is the only major position where the accumulator 17, downstream of the valve 16, cannot be charged by the tractor's hydraulic system. If the three position switch 18 is moved to a tip position (i.e. energising the lower solenoid 20) then the valve 16 will only move to the tip position if the accumulator 17 is sufficiently charged as indicated by the pressure switch 19. The valve 16 will accordingly move to the hold position if the accumulator pressure falls below the set level during tipping and the switch 19 opens. This arrangement may impair the driver's control of the tipping function, but ensures that the braking pressure is not reduced inadvertently below a safe level.

If the supply of electrical power should fail both solenoids 20 will be de-energised and the valve 16 will take up the hold position charging the accumulator 17.

The brakes are applied using hydraulic fluid under pressure from the accumulator 17. The pressure is limited by an unloader or accumulator charging control valve 21 which responds to the pressure on the accumulator side to allow the accumulator 17 to be charged or the fluid to be diverted back to the tractor hydraulic system. The braking pressure is controlled by the proportional brake valve 11 operated through the master and slave cylinder assemblies by the movement of the drawbar sensing element 5.

A solenoid valve 22, activated by a tractor brake pedal switch 23, is used to permit oil flow from the accumulator 17 to the brake valve 11 only when the pedal 24 is depressed. Thus the tractor-towed vehicle combination can be reversed when the sensing element 5 is operated without braking occurring unless the driver depresses the pedal 24. The pedal switch 23 thus has a confirmatory function and is not instrumental primarily in determining the braking operation.

A spring brake cylinder 25 is included so that the accumulator 17 has to be charged before the driver can set off. The trailer is braked in the absence of hydraulic pressure. A spring 50 in the cylinder 25 also provides a bias through a shaft 48 to other brake components. A dual piston cylinder 26 is used for braking to provide an override for the sensing unit and brake valve 11. The piston nearest the gland end can slide separate from the piston more remote from the gland end. Thus the piston at the remote end is capable of pushing the other piston although that other piston can move on its own. The first brake line 31 can thus shift the piston rod and apply the brakes. The second brake line 14 is controlled by a solenoid valve 27, which reacts automatically to a malfunction of the braking system and provides an additional circuit for the purpose of safety. To this end a pressure switch 28 is connected to the hydraulic line between the slave cylinder 10 and the master cylinder 8 where a slave cylinder 10 is used. The electrical signal from the pressure switch 28 is used in connection with the pedal switch 23 to determine whether or not the line 12,31 is functioning properly by use of a logic gate including a time delay at 29 and whether braking has been duly initiated in response to pedal operation. The logic gate responds to the pedal signal and tests, after a short time delay, the pressure in master and slave cylinders 8 and 10. If the pressure has not risen due to a fault then the solenoid valve 27 will be operated to apply the brakes. This feature causes the trailer brakes to be applied for example in the event of a breakaway of the trailer from the tractor, or the tractor and trailer running backwards downhill or to brake when reversing. It will be appreciated therefore that the two-line autonomous system of the invention provides a reliable back up to the braking initiated through lines 12,31 and the proportioning brake valve.

Where no slave cylinder 10 is used, a similar confirmatory signal may be obtained from any other part of the system which is pressurised on brake application. A confirmatory signal can also be obtained from parts which move relatively on brake application (i.e. brake cylinders etc.). A mechanically operated sensing device may then be used.

The solenoid valve 27 supplies fluid at high pressure through line 14 to the chamber intermediate the pistons of the cylinder 26 and so overrides the pressure of the fluid applied by proportional brake valve 11.

The hitch force control system contains only two switches to be operated by the tractor driver. One of these switches 23 is switched by depressing the tractor pedal 24 to operate the solenoid valve 22 to allow reversing and prevents unnecessary wear of the braking components. The other switch is the three position electrical switch 18, which controls the energising of the double solenoid valve 16. The valve 16 can thus be operated remotely, so that the switch 18 can be easily placed in a convenient position for the driver. As the double solenoid valve 16 will return to the accumulator charge position automatically there is no need for the tipping switch 18 to be spring-loaded and for the operator to hold the lever in position.

The hydraulic connections are required between tractor and towed vehicle for pressure feed 52, operated and supplied in the usual way and not described in detail, and for return of the hydraulic fluid 54. Fail safe protection for overcoming the effects of tractor pump or braking component failure and the breakaway of tractor from the towed vehicle are provided. The breakaway condition is complex as the wires to the pedal switched solenoid valve 22, will be severed with the hydraulic pipes. The pedal operated valve 22 is thus preferably arranged so that it is de-energised when open, i.e. depression of the pedal 24 opens the electrical circuit. In a breakaway the hydraulic fluid could flow to the brake valve 11. However, if the tractor is not connected to the towed vehicle drawbar 2, the sensing element 5 will be made inoperative and the brake valve 11 will not open to allow oil flow to the brakes thus ensuring that the brakes are applied.

It would be possible to have another hydraulic pipe going from the accumulator to the brake cylinder with a simple valve to stop the flow of oil except during a breakaway. The valve could be operated by a chain attached to the tractor which would operate the valve during a breakaway.

The system as shown has the pressure switch 28 between the master cylinder 8 and the slave cylinder 10. The pressure switch 28 can be used to find a fault in the system. As depression of the pedal 24 opens the electrical circuit, cutting the wire in a breakaway will have the same effect and the pressure switch 28, will cause the brakes to be applied.

The solenoid valves in the circuit are inherently safe as they all take up the brake position when de-energised for protection against failure of any part of the electrical system.

The tractor driver brake effort for a given retardation is very nearly the same with and without the towed vehicle attached. The system can be largely contained within the towed vehicle construction and be applied to any tractor having hydraulic external services of sufficient pressure to charge the accumulator.

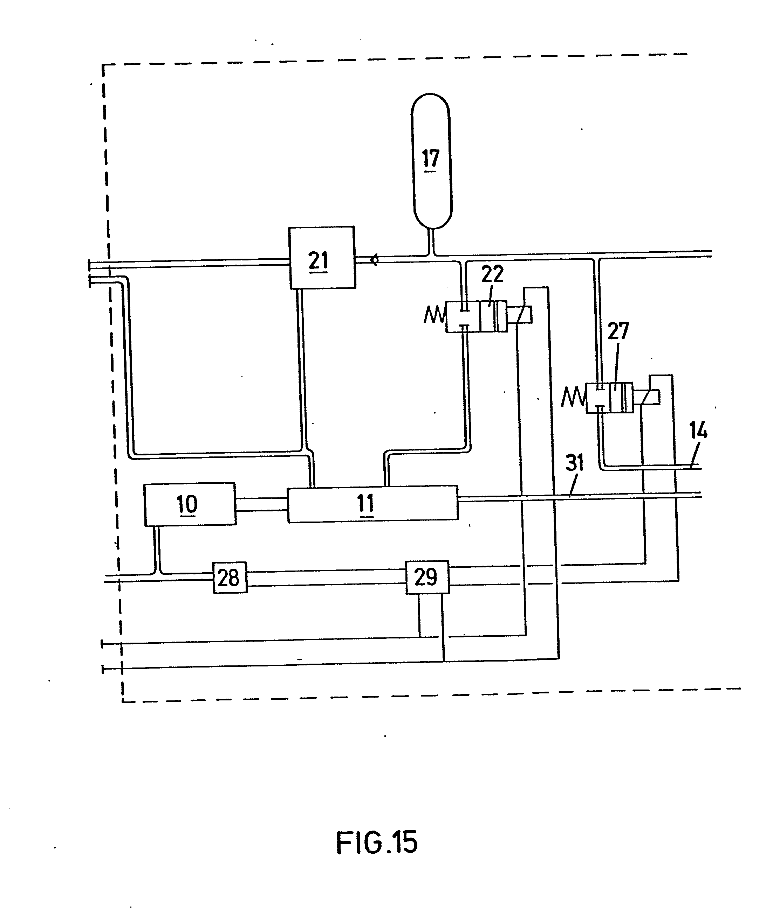

Figure 15 shows a modified version of the trailer brake system which is not adapted for accessory control.

The braking effort is related to the weight of the trailer, no pedal pressure sensors are necessary, the low force exerted by the trailer on the tractor during braking may reduce the risk of jack-knifing, the trailers having the system can be used readily on other tractors and no feedback loop needs to be built in. In the event the engine stops rotating, brakes can still be applied from the power stored in the accumulator. The risk of locking of brakes is reduced, avoiding skidding. Even if the engine stalls whilst the towed vehicle-towing vehicle combination is climbing a gradient, the pressure switch 28 will ensure that the trailer brakes are still applied even though there is no overrun tendency. The number of fittings and components especially provided for trailer braking on the tractor can be reduced (see Figure 1).

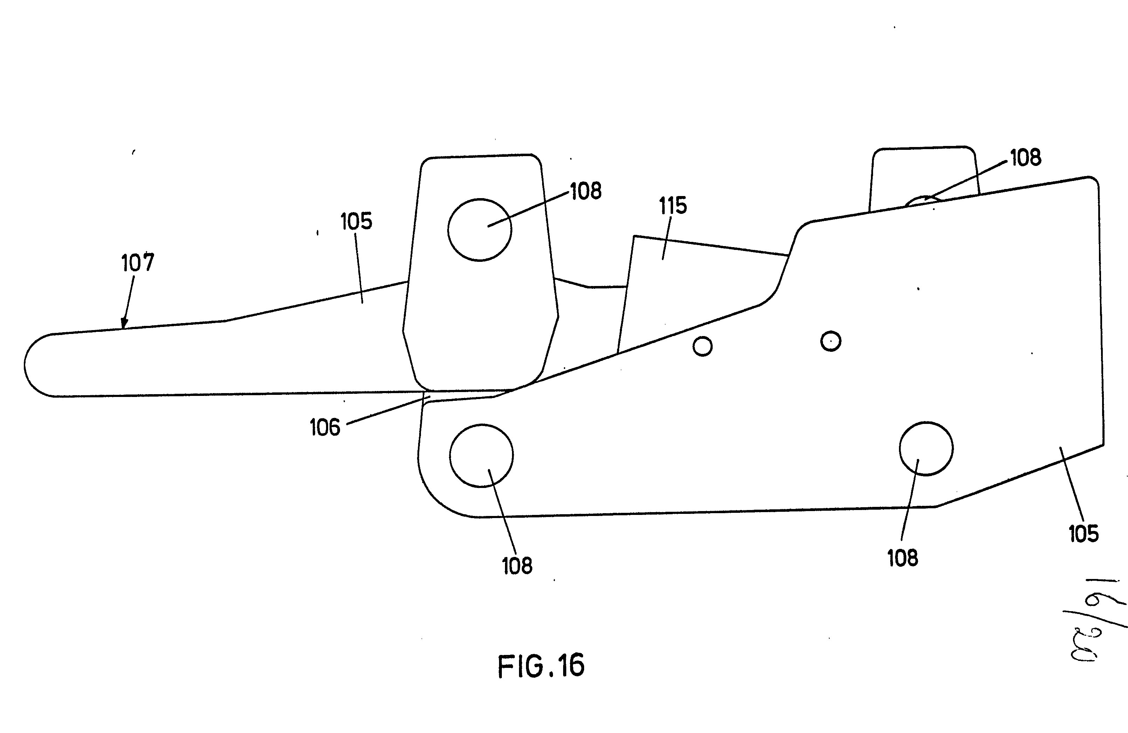

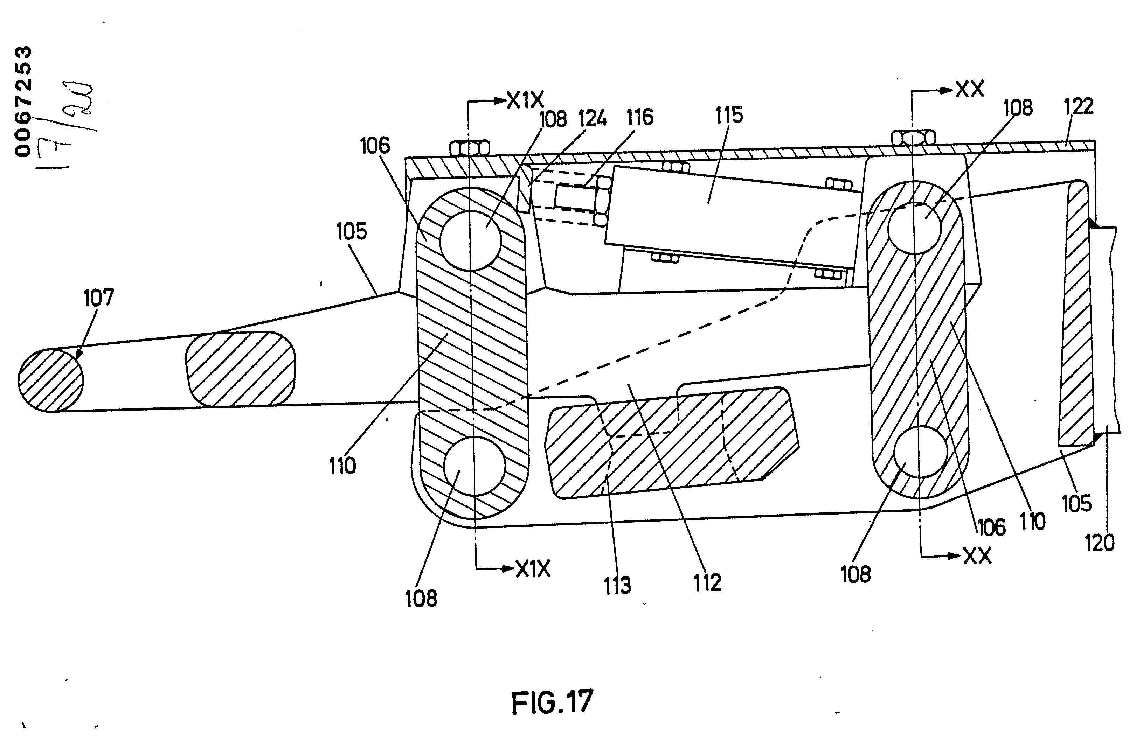

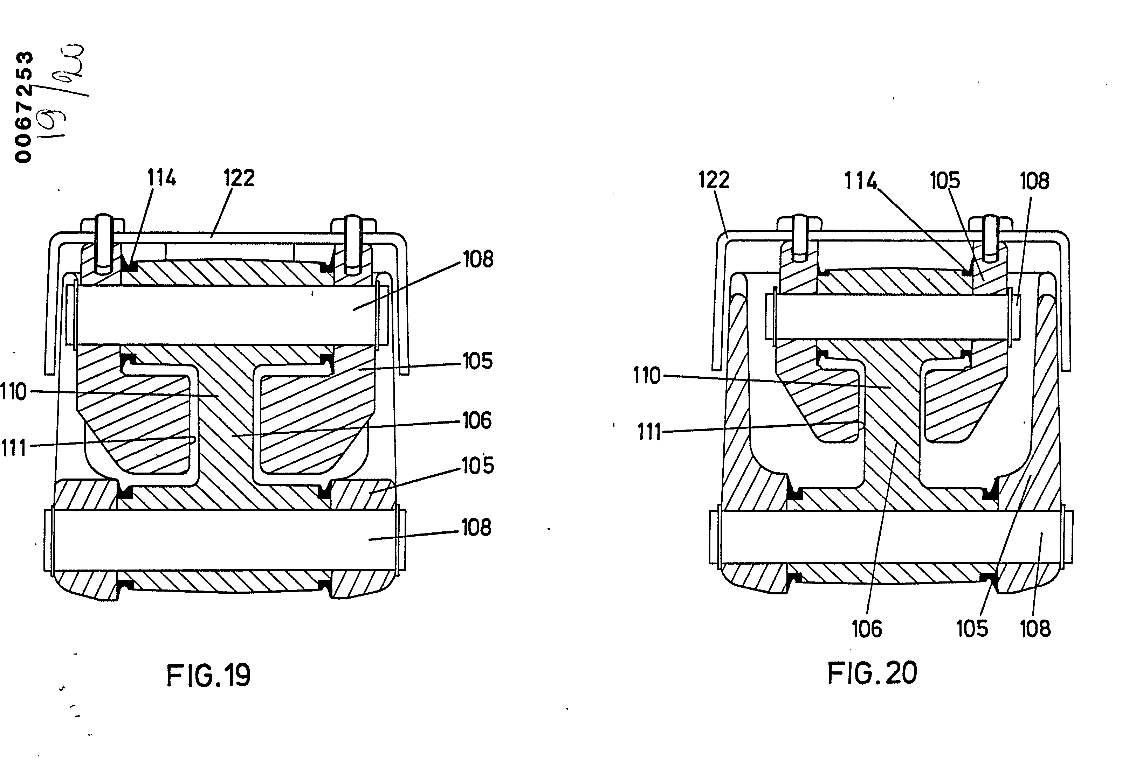

With reference to Figures 16 to 21 in a modified drawbar construction the movable draw bar elements 105 are in the form of castings interconnected by a pair of parallel links 106. One upper element 105 has an eye 107 for fastening to the tractor. The other lower element 105 is secured, for example by bolts to a tow bar 120 of the trailer. The elements mount four pins 108 onto which the links 106 are rotatable journalled with the aid of friction reducing bronze-bearings (not shown). The links 106 are generally H-shaped and have a central part 110 extending through a longitudinal slot 111 in the upper element 105. The backwards and forwards movement of the upper link is limited by abutment lugs 112 which can move to a limited extent in recesses 113 in the lower element 105. Rubber seals 114 are provided to prevent ingress of dirt into the pivot connections formed by the pins 108.

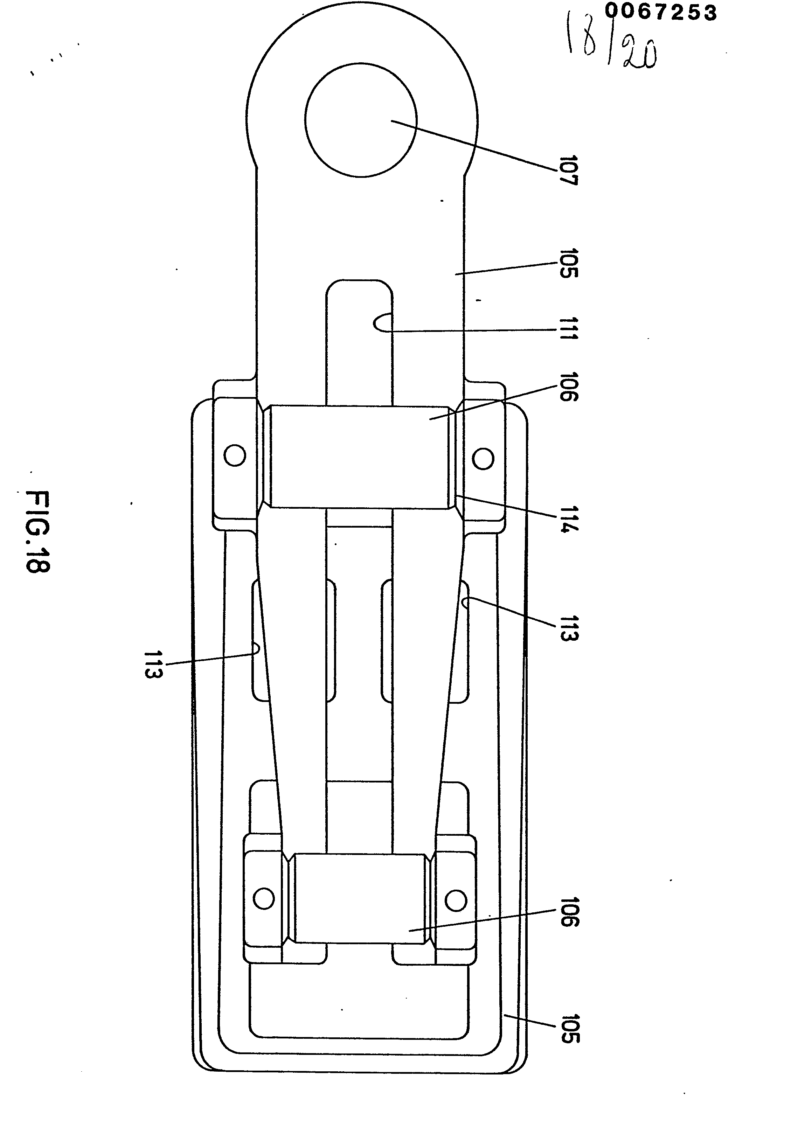

The lower element 105 carries a pressure regulating valve 115 (not shown in Figure 18). A spring 116 acting at one end of the valve 115 causes the valve to be resiliently operated as the elements 105 are longitudinally displaced. Alternatively the spring 116 could be omitted and the valve 115 can be operated directly. A cover 122 is bolted to the movable element 105 and has a lip 124 acting on the other end of the spring 116. In operation the draw or tow bar as a whole will be subjected to downward force resulting from the trailer weight. The rear link 106 will be subject to compressive forces whereas the front link will be subjected to large tensile forces with the result that the weight of the trailer causes the links to assume an upright position.

When the brakes are applied by depression of a pedal such as 24, the links 106 will pivot on the lower element 105 to allow it to move forward with respect to the upper element 105. The spring 116 is compressed and operates the pressure regulating valve 115 to cause the brakes to be applied. The links 106 will remain biased to their upright position because of the trailer weight but, in addition, the braking of the trailer wheels will reduce the overrun tendency.

When the trailer is stopped, the brakes will come off because the weight restores the upright link position. The element 105 can move at very low overrun forces. The valve 115 used is selected to have a small operating force and uses only part of the overrun force. It is thus perhaps possible for the brakes to be applied as the towing vehicle slips to reduce jack-knifing. Also it is perhaps possible for the overrun brakes to come on and off very quickly to reduce skidding risk.

The modified construction as shown does not have a resilient device to return the elements 105 to the non-braking position. Increasing trailer loads will increase the force restoring the links to the upright position. The construction thus can accommodate, without major alteration, a wide variety of trailer loads. Increased loads speed up the brake application. The arrangement is compact and there is little friction to be overcome for brake application.

In further variants, a damper with a resilient return may be used to prevent operation of the valve when running downhill.

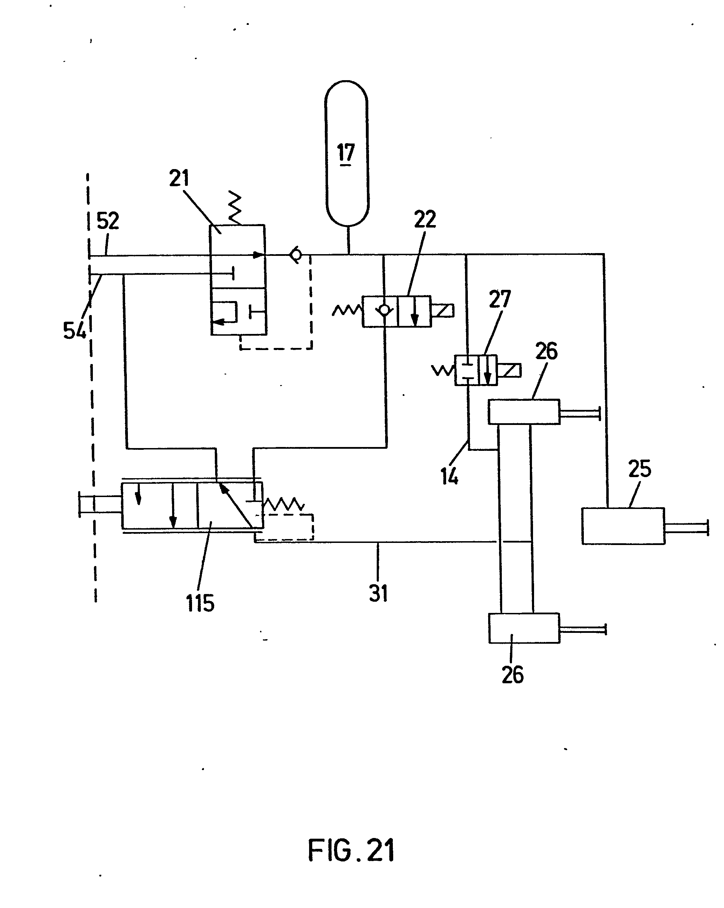

Figure 21 illustrates a circuit incorporating the valve 115. No cylinders 8, 10 are used. The other parts have been given the same reference numeral as the analogously functioning parts in the other embodiments. The valve may be an automotive Citroen doser valve or a pressure regulating valve made by Integrated Hydraulics of Leamington, U.K.

If required resilient members may be incorporated to increase the force urging the upper element back after application of the trailer brakes.

-18-

CLAIMS

1. A towed vehicle brake system including a fluid operated overrun brake mechanism operable in response to the overrun tendency of the towed vehicle towards a towing vehicle, characterised in that an accumulator (17) on the towed vehicle is connected through two parallel lines (12,31) and (14), each containing a servo-operable valve (22) and (27) respectively, to the towed vehicle brake mechanism and in that a control system (23,28,29) controls the valves (22) and (27) in response to operation of a brake member (24) on the towing vehicle to open one line (12) to initiate brake control by a proportional brake valve (11) through line (31) and to open the other line (14) to provide overriding brake actuation, if the control system (23,28, 29) senses the first line (12,31) to be ineffective after the brake member (24) has been operated to initiate towed vehicle braking.

2. A towed vehicle brake system according to claim 1 further characterised in that the control system includes an electrical switch (23) responsive to operation of the brake member (24) for operating a solenoid controlling the valve (22) when the brake member (24) is moved to brake the towing vehicle and operative to activate a timing delay means (29) receiving an input from a pressure sensing device to operate a solenoid controlling the valve (27) to provide overriding brake action if necessary.

3. A towed vehicle brake system according to claim 2 further characterised in that the electrical switch (23) is arranged to be operative after an initial amount of travel in which only the towing vehicle brake mechanism is actuated.

4.    A towed vehicle brake system according to claim 2 or claim 3 further characterised in that the switch (23) is opened when the brake member (24) is moved to brake the towing vehicle and the circuits for the solenoids of valve (22) and (27) and the timing delay means (29) are arranged to respond to the opening of the switch (23).

5.    A towed vehicle brake system according to any of the preceding claims further characterised in that an accumulator charging control valve (21) is on the towed vehicle and in that an accessory control device (30) is arranged for receiving hydraulic fluid which is surplus to the requirements for charging the accumulator (17) so that the towed vehicle brake system has priority in obtaining the hydraulic fluid from the accumulator (17).

6.    A towed vehicle brake system according to claim 5 in which a valve (16) for controlling the accessory device (30) is controlled by solenoids (20) arranged so that in the event of electrical power failure the accumulator (17) will be charged.

7.    A towed vehicle brake system according to claim 6 in which the valve (16) is a diverter valve upstream of the accumulator charging control valve and a pressure sensitive switch (19) is utilised for overriding control of the valve (16) by means (18) to move the valve (16) to the accumulator charging position when the accumulator pressure drops below a predetermined level.

8.    A towed vehicle brake system according to any of the preceding claims further characterised in that the proportional brake valve (11) is controllable on an unbalanced towed vehicle whose tow bar (2) is loaded down by loads on the vehicle by relative movement between that

-20-

tow bar (2) and a telescoping element (5) for coupling to the towing vehicle and that the element (5) mounted at the top and bottom by rubber anti-vibration mountings (1) so as to permit telescoping movement under varying downward loadings of the tow bar (2).

9. A towed vehicle brake system according to any of claims 1 to 7 further characterised in that the proportional brake valve (11) is controllable on an unbalanced towed vehicle whose towbar (2) is loaded downwards by loads on the vehicle by a relative displacement between the tow bar (120) and an upper element (105) connected by parallel depending (110) to a lower element (105) fast to the tow bar (120) so as to permit relative displacement under varying downward loadings of the tow bar (120).

**FIG.1**

FIG.2

FIG.3

FIG.4

FIG.5

FIG.6

FIG.7

FIG.8

FIG.9

FIG.10

FIG.11

FIG.12

FIG.13

0067253

13/20

FIG.14

15/20

FIG.15

FIG.16

FIG.17

FIG.18

107

105

111

106

114

113

113

106

105

FIG.19

FIG.20

FIG.21

# 0067253

**European Patent Office**

## EUROPEAN SEARCH REPORT

Application number

EP 81 30 2545.9

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | US – A – 4 231 442 (BIRKEHOLM) <br> * column 3, line 30 to column 5, line 60; fig. 1 to 6 * <br> -- | 1-3 | B 60 T 13/66 |
| A | DE – B2 – 2 420 665 (CERMAK) <br> * columns 1, 2; fig. * <br> & US – A – 4 049 324 <br> -- | 1-3 | |
| A | DE – A1 – 2 404 519 (BOSCH) <br> -- | | **TECHNICAL FIELDS SEARCHED (Int. Cl.³)** |
| A | DE – A1 – 2 726 504 (BOSCH) <br> -- | | B 60 T 13/00 |
| A | DE – A1 – 2 726 514 (BOSCH) <br> ---- | | |

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 02-02-1982 | LUDWIG |

EPO Form 1503.1  06.78